# EUROPÄISCHE PATENTSCHRIFT

(11) **EP 3 473 377 B1**
(45) Veröffentlichungstag und Bekanntmachung des Hinweises auf die Patenterteilung: **17.03.2021**
(21) Anmeldenummer: 18201474.6
(22) Anmeldetag: 19.10.2018
(51) Int. Cl.: B23Q 15/22, G05B 19/4155, B23Q 17/20, B27C 5/00, B27F 1/02, B27F 1/04, G05B 19/401, G05B 19/404

(54) **VERFAHREN ZUM BETRIEB ZUMINDEST EINER BEARBEITUNGSVORRICHTUNG SOWIE BEARBEITUNGSANLAGE**
METHOD FOR OPERATING AT LEAST ONE PROCESSING DEVICE AS WELL AS PROCESSING ASSEMBLY
PROCÉDÉ DE FONCTIONNEMENT D'AU MOINS UN DISPOSITIF D'USINAGE AINSI QU'UNE INSTALLATION D'USINAGE

(30) Priorität: 20.10.2017 DE 102017124536
(43) Veröffentlichungstag der Anmeldung: 24.04.2019
(73) Patentinhaber: HOMAG GmbH, 72296 Schopfloch (DE)
(72) Erfinder: Dettling, Peter, 72160 Horb (DE); Broghammer, Florian, 78662 Bösingen (DE)
(74) Vertreter: Hoffmann Eitle

(56) Entgegenhaltungen:
- WO-A2-2008/113807
- US-A1- 2004 049 312
- US-A1- 2007 193 012

## Beschreibung

### Technisches Gebiet

Die vorliegende Erfindung betrifft ein Verfahren zum Betrieb zumindest einer Bearbeitungsvorrichtung sowie Bearbeitungsanlage mit zumindest einer Bearbeitungsvorrichtung.

Eine solche Bearbeitungsvorrichtung kann eine Bearbeitungsvorrichtung zum Bearbeiten von, insbesondere plattenförmigen, Werkstücken sein, die beispielsweise im Bereich der Möbel- und Bauelementeindustrie eingesetzt wird.

### Stand der Technik

Auf Grund der geforderten Genauigkeit zur Bearbeitung von Werkstücken und den Dimensionen der hierfür verwendeten Bearbeitungsanlagen werden für das Einrüsten einer solchen Bearbeitungsanlage in der Regel mehrere Stunden Rüstzeit benötigt, bis der Produktionsbetrieb aufgenommen werden kann. Ein solcher Rüstvorgang umfasst unter anderem die Einstellung einzelner Bearbeitungsaggregate der Bearbeitungsvorrichtungen der Bearbeitungsanlage. Diese müssen, um ein optimales Bearbeitungsergebnis zu garantieren, aufeinander abgestimmt werden.

Ursächlich für die Komplexität des Rüstvorgangs ist hierbei das empirische Abstimmen einer Mehrzahl von Bearbeitungsaggregaten, die gemeinschaftlich für das Bearbeitungsergebnis jeweils Teilergebnisse oder Zwischenergebnisse beitragen. Auch erschweren weitere Randbedingungen den Rüstvorgang, sodass üblicherweise von einer relativ langen Anlaufphase ausgegangen werden muss. Beispielsweise erfordert es eine gewisse Zeit, bis die Bearbeitungsanlage in einem temperaturstabilen Zustand arbeitet, bei dem der Temperaturgang der Bearbeitungsvorrichtungen, insbesondere der Motoren oder der Antriebseinrichtungen der Bearbeitungsaggregate, oder der Werkzeuge selbst, in einem gewissen Bereich eingespielt sind. Darüber hinaus beeinflussen chargenbedingte Einflüsse des Werkstoffs des jeweiligen Werkstücks und der Werkzeugverschleiß die Maßhaltigkeit und somit das qualitative Bearbeitungsergebnis am Werkstück.

Der relativ komplexe Einstellprozess und die nachfolgende Überwachung der Bearbeitungsvorrichtung oder -anlage obliegen somit oftmals subjektiven Aspekten des jeweiligen Bedieners, sodass ein optimal eingestelltes Ergebnis nicht unbedingt reproduzierbar ist.

Im Stand der Technik sind bereits mehrere Maßnahmen bekannt, mit denen Werkstücke aus Holz oder Holzwerkstoffen qualitativ bewertet werden können.

Beispielsweise zeigt die DE 10 2010 047 137 A1 ein Verfahren zur Überwachung der Herstellung von Verriegelungs- und Verlegeprofilen von Fußboden-, Wand-, oder Deckenpaneelen, insbesondere von Laminat-, oder Direktdruckpaneelen, mit mindestens einem Laser zur Bestrahlung des Profils und mindestens einer Kamera zum Erfassen des bestrahlten Profils, wobei das Verfahren folgende Schritte umfasst: Zunächst wird eine horizontale und eine vertikale Referenzkante des Profils bestimmt. Nachfolgend wird die Ist-Position von mindestens einem Prüfpunkt an dem Profil mithilfe des Referenzkanten bestimmt, und der Ist-Zustand mit einem Soll-Zustand verglichen, wobei das Paneel in Bezug zu dem mindestens einen Laser und der mindestens einen Kamera bewegt wird und bei jeder Messung die Referenzkanten neu bestimmt werden.

Ferner ist das Dokument DE 10 2005 045 748 A1 bekannt, das eine Messvorrichtung zum Vermessen eines Werkstücks zeigt. In einem Ausführungsbeispiel ist eine Fördereinrichtung für das Werkstück vorgesehen, wobei gegenüberliegend zum Werkstück jeweils eine aus einer Beleuchtungseinheit und einer Kamera gebildete Messvorrichtung vorgesehen ist. Die von den beiden Kameras erfassten Bilddaten werden über ein gemeinsames Bildverarbeitungssystem verarbeitet und über einen Monitor optisch dargestellt. Zwecks Generierung eines Triangulationswinkels wird die von der jeweiligen Beleuchtungseinheit generierte Lichtlinie über einen Umlenkspiegel seitlich auf das Werkstück und die Fördervorrichtung projiziert. Zwecks Erfassung der Fördereinrichtung weist diese ebenfalls gegenüberliegend im Bereich der jeweiligen Messvorrichtung eine erste bzw. eine zweite Bezugsfläche auf, wobei der jeweilige Abstand zwischen der Teilfläche und der Bezugsfläche über das Triangulationsverfahren ermittelbar ist.

Allerdings werden die genannten Messvorrichtungen lediglich für eine Qualitätsüberwachung eingesetzt, wodurch das Problem nicht gelöst wird, dass die Einstellung mehrerer Bearbeitungsaggregate nach den Erfahrungswerten eines jeweiligen Bedieners vorzunehmen ist. Darüber hinaus haben die genannten Verfahren den Nachteil, dass Hinterschneidungen des Profils nicht erkannt werden, da diese durch andere Bereiche des Profils verdeckt werden. Ferner führt die Ausrichtung der Kameras in den genannten Dokumenten dazu, dass sogenannte Parallaxenfehler bei der Ermittlung der Lage des Konturverlaufs entstehen. Die Messergebnisse stehen demnach nicht in direkter geometrischer Beziehung zum tatsächlichen Verlauf des Profils.

Ferner ist eine aktive Fehlerkorrektur nicht beschrieben. Die bekannten Systeme sind lediglich in der Lage, relative Abweichungen zu einem festgelegten und angelernten Punkt zu ermitteln und daraus einen Fehlerzustand abzuleiten.

Als weitere Dokumente sind die WO 2008/113807 A2, US 2004/049312 A1 sowie US 2007/0193012 A1 bekannt.

Dabei betrifft die WO 2008/113807 A2 eine Vorrichtung zur automatischen Feineinstellung eines Roboterprogramms zum Ausführen einer abtragenden Bearbeitung an einem Gegenstand mittels des Roboters.

Die US 2004/049312 A1 beschreibt eine Korrekturvorrichtung, die korrektiv in Steuerbefehle eines Werkzeuges eingreift, falls die tatsächliche Dimension außerhalb eines Eingriffsbereichs liegt, der innerhalb eines Toleranzbereichs liegt.

In der US 2007/0193012 A1 wird ein Steuersystem und Verfahren für einen Metallverarbeitungsprozess beschreiben, wobei optisch arbeitende Systeme eingesetzt werden, um den Bearbeitungsprozess zu überwachen und Prozessparameter zumindest teilweise auf einem erfassten Fehler zu ändern.

### Gegenstand der Erfindung

Die vorliegende Erfindung zielt darauf ab, ein Verfahren zum Betrieb zumindest einer Bearbeitungsvorrichtung bereitzustellen, mit dem die Fertigung bei hoher Qualität und mit erhöhtem Durchsatz ermöglicht wird, und/oder die Nutzungszeit einer Bearbeitungsvorrichtung erhöht wird.

Der Gegenstand des Anspruchs 1 stellt ein entsprechendes Verfahren bereit. Weitere bevorzugte Ausführungsformen sind in den abhängigen Ansprüchen aufgeführt. Ferner betrifft die vorliegende Erfindung eine Bearbeitungsanlage mit zumindest einer Bearbeitungsvorrichtung. Merkmale der Verfahrensansprüche können mit denjenigen der Bearbeitungsanlage kombiniert werden, und umgekehrt.

Das Verfahren ist gemäß Anspruch 1 definiert.

Es ist bevorzugt, dass die Schritte in der genannten Reihenfolge gemäß Anspruch 1 durchgeführt werden.

Die Bearbeitungsvorrichtung ist bevorzugt eingerichtet, ein Werkstück aus Holz, Holzwerkstoff, Verbundmaterial, oder ähnlichem zu bearbeiten oder verarbeiten.

Die Erfindung hat den Vorteil, dass eine genaue Ermittlung einer Abweichung von einer Soll-Profilgeometrie möglich ist und hieraus Maßnahmen abgeleitet werden können. Beispielsweise kann eine Beschädigung der Profilgeometrie durch eine defekte Werkzeugschneide oder ähnliches sicher erkannt werden.

"Profil-Geometrie" bedeutet eine oder mehrere Dimensionen eines Profils, das an einem Werkstück vorgesehen ist. Das Profil wird insbesondere in einer Seiten- oder Schnittansicht eines Abschnitts des Werkstücks ermittelt. Beispielsweise kann es sich bei dem Profil um ein Klick-Profil eines Holzpaneels handeln. Der Korrekturwert kann genutzt werden, auf ein Bearbeitungsaggregat oder mehrere Bearbeitungsaggregate einzuwirken, ein Werkzeug auszutauschen und/oder die Fördergeschwindigkeit zum Bewegen des Werkstücks zu ändern.

Der Korrekturwert für zumindest eines der Bearbeitungsaggregate kann eine direkte Einwirkung auf das Bearbeitungsaggregat bewirken. Alternativ ist es möglich, den Korrekturwert, gegebenenfalls mit weiteren Informationen, anzuzeigen, so dass ein Bediener eine Bedienoperation am Bearbeitungsaggregat durchführen kann.

Erfindungsgemäß ist es vorgesehen, dass nach Ermitteln einer Abweichung zwischen Ist-Profilgeometrie und Soll-Profilgeometrie als Korrekturwert Teilkorrekturwerte für ein jeweiliges Bearbeitungsaggregat ermittelt werden, und der jeweilige Teilkorrekturwert an das jeweilige Bearbeitungsaggregat ausgegeben wird. Somit kann bestimmt werden, dass an einem bestimmten Bearbeitungsaggregat eine größere relative Einstellung vorgenommen werden sollte als an einem anderen Bearbeitungsaggregat.

Es ist bevorzugt, dass die Ist-Profilgeometrie und/oder die Soll-Profilgeometrie zumindest eine Länge, bevorzugt mehrere Längen, und/oder zumindest einen Winkel, bevorzugt mehrere Winkel, des Profils umfasst. Beispielsweise kann das Profil eine Nut oder ein Vorsprung, bevorzugt mit zumindest einem Hinterschnitt, sein.

Es ist bevorzugt, dass der zumindest eine Korrekturwert eine Verstellbewegung eines der Bearbeitungsaggregate in zumindest einer translatorischen Richtung und/oder zumindest einer rotatorischen Richtung, bevorzugt in mehreren translatorischen und/oder rotatorischen Richtungen, umfasst. Somit kann beispielsweise eine Nullposition des Bearbeitungsaggregats neu eingestellt werden.

In einer Ausführungsform ist es vorgesehen, dass das Verfahren, insbesondere sporadisch, zyklisch oder fortlaufend, während eines Fertigungsprozesses durchgeführt wird, oder das Verfahren während eines Rüstvorgangs durchgeführt wird. Wird das Verfahren während eines Fertigungsprozesses durchgeführt, so kann das Verfahren zum Erreichen einer hohen und möglichst gleichbleibenden Produktqualität genutzt werden.

Bevorzugt wird das Ermitteln der Ist-Profilgeometrie mittels zumindest einer berührungslosen Messvorrichtung, insbesondere einer Kamera, eines Lasers und/oder einer Ultraschallmesseinheit, durchgeführt, wobei ferner bevorzugt ist, dass das Ermitteln der Ist-Profilgeometrie mittels eines Auflicht- oder Durchlichtverfahrens von einer Seite des Profils erfolgt. Auf diese Weise kann ein möglichst reibungsloser Verfahrensablauf gewährleistet werden.

Gemäß einer Ausführungsform wird im Rahmen des Verfahrens das Ermitteln der Ist-Profilgeometrie mittels einer einen oder mehrere Berührungssensoren aufweisenden Messvorrichtung durchgeführt. Ein Berührungssensor ist relativ robust ausgeführt wird durch eine gegebenenfalls staubbelastete Umgebung kaum beeinflusst.

Es kann im Rahmen des Verfahrens bevorzugt sein, dass nach Ausgabe eines Korrekturwertes ein weiteres (zweites) Werkstück bearbeitet und der Schritt des Ermittelns einer Ist-Profilgeometrie und des Abgleichs der Ist-Profilgeometrie mit einer Soll-Profilgeometrie wiederholt wird. Diese Schritte können so lange wiederholt werden, bis die ermittelte Ist-Profilgeometrie im Toleranzbereich liegt und somit eine Fertigung gemäß hohen Qualitätsanforderungen gewährleistet werden kann.

Ferner kann das Bearbeiten des Werkstücks eine spanende Bearbeitung, insbesondere eine Fräsbearbeitung, eine Bohrbearbeitung, eine Schleifbearbeitung, oder eine Kombination hiervon umfassen. Eine derartige Bearbeitung ist insbesondere zur Bearbeitung eines Werkstücks aus Holz- oder Holzwerkstoffen einsetzbar.

Gemäß einer weiteren Ausführungsform ist es vorgesehen, dass mit dem Verfahren mehrere Bearbeitungsvorrichtungen einer Bearbeitungsanlage betrieben werden. Somit können einzelne Arbeitsschritte verschiedener Bearbeitungsvorrichtungen aufeinander abgestimmt und somit die Produktqualität gesteigert werden.

Ferner betrifft die Erfindung eine Bearbeitungsanlage mit den Merkmalen gemäß Anspruch 10. Die Bearbeitungsanlage ist insbesondere eingerichtet, das Verfahren gemäß einem der vorangegangenen Aspekte oder gemäß einem der Ansprüche 1-9 durchzuführen. Weitere bevorzugte Ausführungsformen sind in den abhängigen Vorrichtungsansprüchen aufgeführt.

Ferner betrifft die Erfindung die Verwendung der Bearbeitungsanlage zur Durchführung des Verfahren gemäß einem der vorangegangenen Aspekte oder gemäß einem der Ansprüche 1-9.

### Kurze Beschreibung der Zeichnungen

- Fig. 1: ist eine schematische Ansicht einer Bearbeitungsanlage mit mehreren Bearbeitungsvorrichtungen.
- Fig. 2a: zeigt ein Messverfahren, das beim erfindungsgemäßen Verfahren oder der erfindungsgemäßen Bearbeitungsanlage eingesetzt werden kann.
- Fig. 2b: zeigt ein alternatives Messverfahren, das beim erfindungsgemäßen Verfahren oder bei der erfindungsgemäßen Bearbeitungsanlage eingesetzt werden kann.
- Fig. 3: zeigt einen Verfahrensablauf zur Erläuterung des erfindungsgemäßen Verfahrens und der erfindungsgemäßen Bearbeitungsanlage.

### Detaillierte Beschreibung der bevorzugten Ausführungsform

Nachfolgend wird anhand der beigefügten Figuren die Erfindung anschaulich beschrieben, wobei die nachfolgenden Erläuterungen nicht einschränkend zu betrachten sind.

Merkmale, die im Zusammenhang mit der nachfolgenden Beschreibung dargestellt werden, können beim erfindungsgemäßen Verfahren sowie bei der erfindungsgemäßen Bearbeitungsanlage zum Einsatz kommen. Modifikationen solcher Merkmale können jeweils mit anderen Merkmalen der beschriebenen Ausführungsform kombiniert werden, um weitere Ausführungsformen der vorliegenden Erfindung auszubilden.

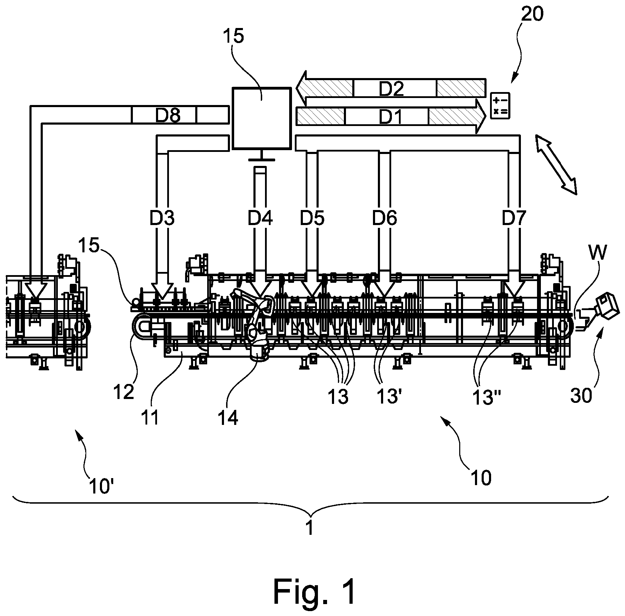

In Fig. 1 wird anhand einer schematischen Zeichnung eine Bearbeitungsanlage 1 dargestellt. Die Bearbeitungsanlage 1 umfasst eine erste Bearbeitungsvorrichtung 10 sowie eine zweite Bearbeitungsvorrichtung 10'. In der Durchlaufrichtung eines Werkstücks ist die erste Bearbeitungsvorrichtung 10 nachrangig zur zweiten Bearbeitungseinrichtung 10' angeordnet. Ein Werkstück kann manuell oder maschinell von einer Bearbeitungsvorrichtung zur nächsten übergeben werden.

In der Bearbeitungsanlage 1 können weitere Bearbeitungsvorrichtungen vorgesehen sein. Nachfolgend wird lediglich die erste Bearbeitungsvorrichtung 10 im Detail beschrieben, um die Erfindung anschaulich zu beschreiben. Ähnliche oder andere Details können in der zweiten Bearbeitungsvorrichtung 10' oder in einer weiteren Bearbeitungsvorrichtung vorgesehen sein.

Die erste Bearbeitungsvorrichtung 10 umfasst ein Maschinenbett 11, das sich entlang der Durchlaufrichtung erstreckt. Zur Bewegung der Werkstücke in der Durchlaufrichtung ist im vorliegenden Ausführungsbeispiel eine Fördervorrichtung 12 vorgesehen, die beispielsweise als Kettenförderer oder Riemenförderer ausgebildet ist.

Entlang der Förderstrecke der ersten Bearbeitungsvorrichtung 10 sind mehrere Bearbeitungsaggregate 13, 13', 13" angeordnet, die verschiedene Bearbeitungsvorgänge an einem durch die Fördervorrichtung 12 bewegten Werkstück durchführen können. Insbesondere werden in mehreren Stufen unter anderem Ausnehmungen an einer Schmalseite eines Werkstücks W eingebracht, um ein Profil am Werkstück W auszubilden. Ein derart bearbeitetes Werkstück kann beispielsweise ein Parkettpaneel mit einem Klickprofil oder einem ähnlichen Profil sein.

Die erste Bearbeitungsvorrichtung 10 umfasst ferner einen Werkstückwechsler 14, der im vorliegenden Ausführungsbeispiel als Roboter ausgebildet ist. der Werkzeugwechsler 14 kann ein Werkzeug an einem oder mehreren Bearbeitungsaggregaten 13, 13', 13" wechseln.

In einem Auslaufbereich der Bearbeitungsvorrichtung 10 ist eine Messvorrichtung 30 vorgesehen, die nachfolgend näher erläutert wird. Mit der Messvorrichtung 30 wird eine Ist-Profilgeometrie eines bearbeiteten Werkstücks erfasst.

Die Bearbeitungsanlage 1 umfasst ferner eine Steuervorrichtung 15. Darüber hinaus ist eine mit der Steuervorrichtung 15 kommunizierende übergeordnete Steuerung 20 vorgesehen. Die Kommunikation zwischen der Steuervorrichtung 15, der Steuerung 20 und/oder Aggregaten der Bearbeitungsvorrichtung 10 kann kabelgebunden oder drahtlos erfolgen.

Durch die Steuervorrichtung 15 werden Daten zu den in der ersten Bearbeitungsvorrichtung 10 eingesetzten Bearbeitungsaggregaten oder Werkzeugen ermittelt, oder diese Daten werden manuell eingegeben. Darüber hinaus werden Daten zur Werkstückgeometrie eines zu bearbeitenden Werkstücks ermittelt oder manuell eingegeben.

Diese Daten werden zur übergeordneten Steuerung 20 transferiert (D1). Die übergeordnete Steuerung 20 befindet sich in Kommunikation mit der Messvorrichtung 30. Die Messvorrichtung 30 ermittelt eine Ist-Profilgeometrie eines bearbeiteten Werkstücks, das bspw. im Zuge eines Rüstvorgangs als Testwerkstück bearbeitet wurde. Alternativ kann es sich um ein Werkstück handeln, das während eines Fertigungsprozesses der Bearbeitungsvorrichtung 10 bewertet werden soll.

Die übergeordnete Steuerung 20 vergleicht die vorliegenden Werte der Soll-Profilgeometrie mit der durch die Messvorrichtung 30 ermittelten Ist-Profilgeometrie. Wird eine Abweichung festgestellt, so werden entsprechende Daten an die Steuervorrichtung 15 übermittelt.

Die Steuervorrichtung 15 ermittelt aus den erhaltenden Daten (D2) Maßnahmen zur Steuerung der Bearbeitungsaggregate oder optional eines Werkzeugwechslers. Die beschriebenen Steueroptionen sind hierbei beispielhaft zu verstehen.

Insbesondere kann auf eine Breitenverstellung am Einlauflineal eingewirkt werden (D3). Ferner kann dem Werkzeugwechsler 14 mitgeteilt werden, dass ein defektes Werkzeug an einem bestimmten Bearbeitungsaggregat vorliegt, und dieses Werkzeug auszutauschen ist (D4). Ferner kann die Steuervorrichtung 15 veranlassen, dass auf die Bearbeitungsaggregate 13, 13', 13" eingewirkt wird, um deren Position in einer translatorischen und/oder einer rotatorischen Richtung zu ändern. Hierbei kann jedes der Bearbeitungsaggregate 13, 13', 13" unterschiedliche Achsen aufweisen, auf die eingewirkt werden kann. Insbesondere sind Vier-Achs-, Fünf-Achs-, Sechs-Achs-Aggregate zu nennen, die in der ersten Bearbeitungsvorrichtung 10 kombiniert sein können.

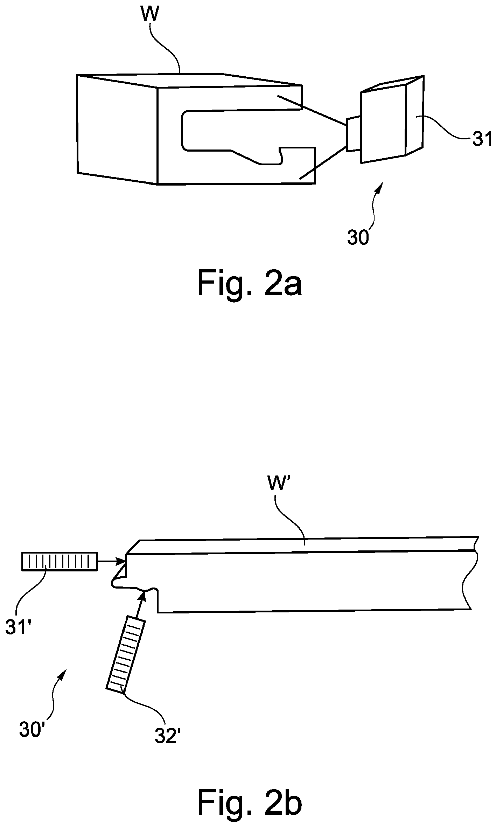

In Fig. 2a wird ein Beispiel einer Messvorrichtung 30 gezeigt, die eine optische Erfassung einer Profilgeometrie eines Werkstücks durchführt. Dabei wird ein Messsensor 31 eingesetzt, der einen Laser und eine Kamera umfasst, um das Profil des Werkstücks abzutasten und entsprechend Profilgeometrie-Daten zu ermitteln.

In Fig. 2b wird eine alternative Ausführungsform einer Messvorrichtung 30' gezeigt, die mehrere Berührungssensoren 31', 32' (taktile Sensoren) umfasst. Die Berührungssensoren 31', 32' kommen mit bestimmten Abschnitten des Profils des Werkstücks W' in Kontakt und ermitteln profilbezogene Daten.

Gemäß einer weiteren Ausführungsform kann ein berührungsloser Messsensor und ein Berührungssensoren in einer Messvorrichtung kombiniert werden, um eine Profilgeometrie eines Werkstücks zu erfassen.

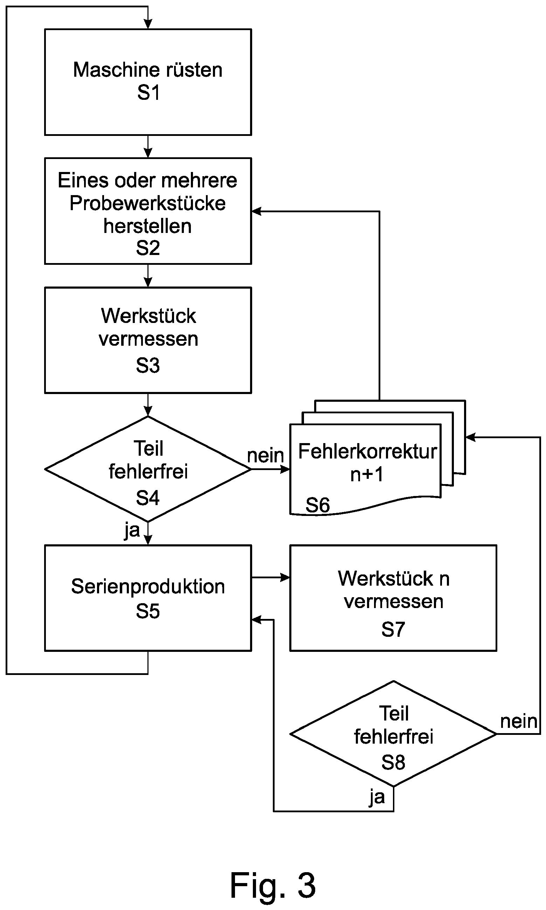

In Fig. 3 wird ein beispielhafter Verfahrensablauf dargestellt, wobei sich das Verfahren im vorliegenden Ausführungsbeispiel aus einem Abschnitt zum Ermitteln einer Profilgeometrieb beim Rüsten der Bearbeitungsvorrichtung 10 und einem Abschnitt zum Ermitteln einer Profilgeometrie während eines laufenden Fertigungsprozesses im Rahmen einer Qualitätsüberwachung zusammensetzt. Die genannten Verfahrensabschnitte können auch einzeln zum Einsatz kommen.

Zunächst wird die Bearbeitungsvorrichtung 10 gerüstet (Schritt S1). Hierbei werden beispielsweise die Bearbeitungsaggregate 13, 13', 13" mit bestimmten Werkzeugen bestückt und die Bearbeitungsaggregate für eine Bearbeitung eingestellt. Diese Einstellung der Bearbeitungsaggregate kann beispielsweise Grundpositionen der Bearbeitungsaggregate betreffen.

Nachfolgend wird ein Probewerkstück mit der derart vorbereiteten Bearbeitungsvorrichtung gefertigt (Schritt S2).

Das derart hergestellte Werkstück wird nunmehr durch die Messvorrichtung (30 oder 30') bewertet und im Rahmen dessen die Ist-Profilgeometrie des Werkstücks ermittelt.

Die übergeordnete Steuerung 20 entscheidet in einem nachfolgenden Verfahrensschritt (Schritt S4), ob das Werkstück fehlerfrei hergestellt wurde. Dies bedeutet, dass die ermittelte Ist-Profilgeometrie innerhalb eines Toleranzbereichs zur Soll-Profilgeometrie liegt.

Wird in Schritt S4 festgestellt, dass die Ist-Profilgeometrie im Toleranzbereich der Soll-Profilgeometrie liegt (JA in Schritt S4), so kann der übliche Fertigungsbetrieb (die Serienproduktion) gestartet werden (Schritt S5).

Wird in Schritt S4 hingegen festgestellt, dass eine Abweichung der Ist-Profilgeometrie von der Soll-Profilgeometrie außerhalb des festgelegten Toleranzbereichs liegt (NEIN in Schritt S4), so wird eine Fehlerkorrektur durchgeführt (Schritt S6). Nachfolgend wird nochmals ein Probewerkstück hergestellt (Schritt S2).

Wird wie zuvor beschrieben die Serienproduktion gestartet (Schritt S5), so kann im Rahmen der Serienproduktion ein Werkstück vermessen werden (Schritt S7), um die jeweilige Ist-Profilgeometrie zu ermitteln.

Die übergeordnete Steuerung 20 entscheidet auf Grundlage der Messergebnisse der Messvorrichtung 30, 30', ob das Werkstück innerhalb des Toleranzbereichs gefertigt wurde (Schritt S8). Sollte dies nicht der Fall sein (NEIN im Schritt S8), so wird eine Fehlerkorrektur im Rahmen des Schritts S6 durchgeführt. Ferner kann dies erfordern, dass wiederum ein Probewerkstück herzustellen ist (Schritt S2).

Wird in Schritt S8 hingegen festgestellt, dass das Werkstück derart gefertigt wurde, dass die Ist-Profilgeometrie innerhalb eines Toleranzbereichs der Soll-Profilgeometrie liegt (JA in Schritt S8), so wird die Serienproduktion fortgesetzt.

## Patentansprüche

1. Verfahren zum Betrieb zumindest einer Bearbeitungsvorrichtung (10, 10'), umfassend die Schritte:
Bearbeiten eines ersten Werkstücks mit mehreren Bearbeitungsaggregaten (13, 13', 13"), so dass das Werkstück zumindest abschnittsweise ein Profil aufweist, Ermitteln einer Ist-Profilgeometrie des bearbeiteten Werkstücks,
Abgleich der Ist-Profilgeometrie mit einer Soll-Profilgeometrie,
und, wenn eine Abweichung zwischen Ist-Profilgeometrie und Soll-Profilgeometrie ermittelt wird, Ausgabe zumindest eines Korrekturwertes für zumindest eines der Bearbeitungsaggregate (13, 13', 13"),
wobei nach Ermitteln einer Abweichung zwischen Ist-Profilgeometrie und Soll-Profilgeometrie als Korrekturwert Teilkorrekturwerte für ein jeweiliges Bearbeitungsaggregat (13, 13', 13") ermittelt werden, und der jeweilige Teilkorrekturwert an das jeweilige Bearbeitungsaggregat (13, 13', 13") ausgegeben wird.

2. Verfahren gemäß Anspruch 1, **dadurch gekennzeichnet, dass** die Ist-Profilgeometrie und/oder die Soll-Profilgeometrie zumindest eine Länge, bevorzugt mehrere Längen, und/oder zumindest einen Winkel, bevorzugt mehrere Winkel, des Profils umfasst.

3. Verfahren gemäß einem der vorangegangenen Ansprüche, **dadurch gekennzeichnet, dass** der zumindest ein Korrekturwert eine Verstellbewegung eines der Bearbeitungsaggregate (13, 13', 13") in zumindest einer translatorischen Richtung und/oder zumindest einer rotatorischen Richtung, bevorzugt in mehreren translatorischen und/oder rotatorischen Richtungen, umfasst.

4. Verfahren gemäß einem der vorangegangenen Ansprüche, **dadurch gekennzeichnet, dass** das Verfahren, insbesondere sporadisch, zyklisch oder fortlaufend, während eines Fertigungsprozesses durchgeführt wird, oder das Verfahren während eines Rüstvorgangs durchgeführt wird.

5. Verfahren gemäß einem der vorangegangenen Ansprüche, **dadurch gekennzeichnet, dass** das Ermitteln der Ist-Profilgeometrie mittels zumindest einer berührungslosen Messvorrichtung (30), insbesondere einer Kamera, eines Lasers und/oder einer Ultraschallmesseinheit, erfolgt, wobei bevorzugt ist, dass das Ermitteln der Ist-Profilgeometrie mittels eines Auflicht- oder Durchlichtverfahrens von einer Seite des Profils erfolgt.

6. Verfahren gemäß einem der vorangegangenen Ansprüche, **dadurch gekennzeichnet, dass** das Ermitteln der Ist-Profilgeometrie mittels einer einen oder mehrere Berührungssensoren (31', 32') aufweisenden Messvorrichtung (30') durchgeführt wird.

7. Verfahren gemäß einem der vorangegangenen Ansprüche, **dadurch gekennzeichnet, dass** nach Ausgabe eines Korrekturwertes mindestens ein weiteres Werkstück bearbeitet und der Schritt des Ermittelns einer Ist-Profilgeometrie und des Abgleichs der Ist-Profilgeometrie mit einer Soll-Profilgeometrie wiederholt wird.

8. Verfahren gemäß einem der vorangegangenen Ansprüche, **dadurch gekennzeichnet, dass** das Bearbeiten des Werkstücks eine spanende Bearbeitung, insbesondere eine Fräsbearbeitung, eine Bohrbearbeitung, eine Schleifbearbeitung, oder eine Kombination hiervon umfasst.

9. Verfahren gemäß einem der vorangegangenen Ansprüche, **dadurch gekennzeichnet, dass** mit dem Verfahren mehrere Bearbeitungsvorrichtungen einer Bearbeitungsanlage (1) betrieben werden.

10. Bearbeitungsanlage (1), insbesondere zur Bearbeitung eines Werkstücks aus Holz- oder Holzwerkstoffen, umfassend zumindest eine Bearbeitungsvorrichtung (10, 10'), wobei die Bearbeitungsvorrichtung (10, 10') mehrere Bearbeitungsaggregate umfasst, die zum Ausbilden eines Profils an einem Werkstück geeignet sind, ferner umfassend:
eine Messvorrichtung (30, 30'), die eingerichtet ist, eine Ist-Profilgeometrie des bearbeiteten Werkstücks zu ermitteln, und
eine Steuerung (20), die eingerichtet ist, die Ist-Profilgeometrie mit einer Soll-Profilgeometrie abzugleichen,
wobei die Steuereinrichtung ferner eingerichtet ist, Teilkorrekturwerte für ein jeweiliges Bearbeitungsaggregat (13, 13', 13") zu ermitteln und einen jeweiligen Teilkorrekturwert an ein jeweilige Bearbeitungsaggregat (13, 13', 13") auszugeben.

11. Bearbeitungsanlage (1) gemäß Anspruch 10, ferner umfassend eine Steuervorrichtung (15), die sich in Kommunikation mit der Steuerung (20) befindet, wobei die Steuervorrichtung (15) eingerichtet ist, dass auf die Bearbeitungsaggregate (13, 13', 13"), eine Fördereinrichtung (12) und/oder einen Werkzeugwechsler der Bearbeitungsvorrichtung (10, 10') einzuwirken.

12. Bearbeitungsanlage (1) gemäß Anspruch 10 oder 11, **dadurch gekennzeichnet, dass** die Messvorrichtung eine berührungslosen Messvorrichtung (30) umfasst, insbesondere eine Kamera, ein Laser und/oder eine Ultraschallmesseinheit, wobei bevorzugt ist, dass die Messvorrichtung (30) eingerichtet ist, die Ist-Profilgeometrie mittels eines Auflicht- oder Durchlichtverfahrens von einer Seite des Profils zu ermitteln.

13. Bearbeitungsanlage (1) gemäß einem der Ansprüche 10-12, **dadurch gekennzeichnet, dass** die Messvorrichtung (30') eine einen oder mehrere Berührungssensoren (31', 32') aufweisende Messvorrichtung (30') umfasst.

14. Bearbeitungsanlage (1) gemäß einem der Ansprüche 10-13, **dadurch gekennzeichnet, dass** die Bearbeitungsanlage mehrere Bearbeitungsvorrichtungen (10, 10') umfasst.

## Claims

1. Method for operating a machining device (10, 10'), comprising the steps of:
machining a first workpiece by means of a plurality of machining units (13, 13', 13'') such that the workpiece has a profile at least in portions,
determining an actual profile geometry of the machined workpiece,
comparing the actual profile geometry with a target profile geometry,
and, if a deviation between the actual profile geometry and the target profile geometry is determined, outputting at least one correction value for at least one of the machining units (13, 13', 13''),
wherein, after determining a deviation between the actual profile geometry and the target profile geometry as a correction value, partial correction values are determined for a relevant machining unit (13, 13', 13''), and the relevant partial correction value is output to the relevant machining unit (13, 13', 13").

2. Method according to claim 1, **characterised in that** the actual profile geometry and/or the target profile geometry includes at least one length, preferably a plurality of lengths, and/or at least one angle, preferably a plurality of angles, of the profile.

3. Method according to any of the preceding claims, **characterised in that** the at least one correction value includes a displacement movement of one of the machining units (13, 13', 13'') in at least one translational direction and/or at least one rotational direction, preferably in a plurality of translational and/or rotational directions.

4. Method according to any of the preceding claims, **characterised in that** the method is carried out in particular sporadically, cyclically or continuously during a manufacturing process, or the method is carried out during a setup process.

5. Method according to any of the preceding claims, **characterised in that** the actual profile geometry is determined by means of at least one non-contact measuring device (30), in particular a camera, a laser and/or an ultrasound measuring unit,
wherein it is preferable for the actual profile geometry to be determined by means of an incident light or transmitted light method from one side of the profile.

6. Method according to any of the preceding claims, **characterised in that** the actual profile geometry is determined by means of a measuring device (30') comprising one or more contact sensors (31', 32').

7. Method according to any of the preceding claims, **characterised in that**, after a correction value is output, at least one other workpiece is machined and the step of determining an actual profile geometry and comparing the actual profile geometry with a target profile geometry is repeated.

8. Method according to any of the preceding claims, **characterised in that** the machining of the workpiece involves material removal, in particular milling, drilling, grinding or a combination hereof.

9. Method according to any of the preceding claims, **characterised in that** a plurality of machining devices of a machining system (1) are operated with the method.

10. Machining system (1), in particular for machining a workpiece made of wood or wood materials, comprising at least one machining device (10, 10'), wherein the machining device (10, 10') comprises a plurality of machining units suitable for creating a profile on a workpiece, further comprising:
a measuring device (30, 30'), which is designed to determine an actual profile geometry of the machined workpiece, and
a controller (20), which is designed to compare the actual profile geometry with a target profile geometry,
wherein the control apparatus is further designed to determine partial correction values for a relevant machining unit (13, 13', 13'') and to output a relevant partial correction value to a relevant machining unit (13, 13', 13").

11. Machining system (1) according to claim 10, further comprising a control device (15), which is in communication with the controller (20), wherein the control device (15) is designed to act on the machining units (13, 13', 13''), a conveying apparatus (12) and/or a tool changer of the machining device (10, 10').

12. Machining system (1) according to claim 10 or 11, **characterised in that** the measuring device comprises a non-contact measuring device (30), in particular a camera, a laser and/or an ultrasound measuring unit, wherein it is preferable for the measuring device (30) to be designed to determine the actual profile geometry by means of an incident light or transmitted light method from one side of the profile.

13. Machining system (1) according to any of claims 10 to 12, **characterised in that** the measuring device (30') comprises a measuring device (30') comprising one or more contact sensors (31', 32').

14. Machining system (1) according to any of claims 10 to 13, **characterised in that** the machining system comprises a plurality of machining devices (10, 10').

## Revendications

1. Procédé de fonctionnement d'au moins un dispositif d'usinage (10, 10'), comprenant les étapes consistant à :
usiner une première pièce avec plusieurs groupes d'usinage (13, 13', 13") de sorte que la pièce présente un profil au moins par sections,
déterminer une géométrie de profil réelle de la pièce usinée,
ajuster la géométrie de profil réelle avec une géométrie de profil de consigne,
et, si un écart entre la géométrie de profil réelle et la géométrie de profil de consigne est déterminé, émettre au moins une valeur de correction pour au moins un des groupes d'usinage (13, 13', 13"),
dans lequel après la détermination d'un écart entre la géométrie de profil réelle et la géométrie de profil de consigne, des valeurs de correction partielle sont déterminées comme valeur de correction pour un groupe d'usinage respectif (13, 13', 13") et la valeur de correction partielle respective est émise au groupe d'usinage respectif (13, 13', 13").

2. Procédé selon la revendication 1, **caractérisé en ce que** la géométrie de profil réelle et/ou la géométrie de profil réelle comprend au moins une longueur, de préférence plusieurs longueurs, et/ou au moins un angle, de préférence plusieurs angles, du profil.

3. Procédé selon l'une quelconque des revendications précédentes, **caractérisé en ce que** l'au moins une valeur de correction comprend un mouvement de réglage de l'un des groupes d'usinage (13, 13', 13") dans au moins une direction de translation et/ou au moins une direction de rotation, de préférence dans plusieurs directions de translation et/ou de rotation.

4. Procédé selon l'une quelconque des revendications précédentes, **caractérisé en ce que** le procédé est effectué, en particulier de manière sporadique, cyclique ou continue, au cours d'un processus de fabrication, ou le procédé est effectué au cours d'une opération d'équipement.

5. Procédé selon l'une quelconque des revendications précédentes, **caractérisé en ce que** la détermination de la géométrie de profil réelle est réalisée au moyen d'au moins un dispositif de mesure sans contact (30), en particulier une caméra, un laser et/ou une unité de mesure à ultrasons, dans lequel la détermination de la géométrie de profil réelle est de préférence réalisée au moyen d'un procédé de lumière incidente ou de lumière transmise à partir d'un côté du profil.

6. Procédé selon l'une quelconque des revendications précédentes, **caractérisé en ce que** la détermination de la géométrie de profil réelle est effectuée au moyen d'un dispositif de mesure (30') présentant un ou plusieurs capteurs de contact (31', 32').

7. Procédé selon l'une quelconque des revendications précédentes, **caractérisé en ce qu'**après l'émission d'une valeur de correction, au moins une autre pièce est usinée et l'étape de détermination d'une géométrie de profil réelle et d'ajustement de la géométrie de profil de consigne avec une géométrie de profil de consigne est répétée.

8. Procédé selon l'une quelconque des revendications précédentes, **caractérisé en ce que** l'usinage de la pièce comprend un usinage de coupe, en particulier un usinage de fraisage, un usinage de perçage, un usinage de meulage ou une combinaison de ceux-ci.

9. Procédé selon l'une quelconque des revendications précédentes, **caractérisé en ce que** plusieurs dispositifs d'usinage d'un système d'usinage (1) sont utilisés avec le procédé.

10. Système d'usinage (1), en particulier pour usiner une pièce en matériaux en bois ou en matériaux dérivés du bois, comprenant au moins un dispositif d'usinage (10, 10'), dans lequel le dispositif d'usinage (10, 10') comprend plusieurs groupes d'usinage qui sont adaptés pour former un profil sur une pièce, comprenant en outre :
un dispositif de mesure (30, 30') qui est configuré pour déterminer une géométrie de profil réelle de la pièce usinée, et
une commande (20) qui est configurée pour ajuster la géométrie de profil réelle avec une géométrie de profil de consigne,
dans lequel l'appareil de commande est en outre configuré pour déterminer des valeurs de correction partielle pour un groupe d'usinage respectif (13, 13', 13") et pour émettre une valeur de correction partielle respective à un groupe d'usinage respectif (13, 13', 13").

11. Système d'usinage (1) selon la revendication 10, comprenant en outre un dispositif de commande (15) qui est en communication avec la commande (20), dans lequel le dispositif de commande (15) est configuré pour agir sur les groupes d'usinage (13, 13', 13"), un dispositif de transport (12) et/ou un changeur d'outils du dispositif d'usinage (10, 10').

12. Système d'usinage (1) selon la revendication 10 ou 11, **caractérisé en ce que** le dispositif de mesure comprend un dispositif de mesure sans contact (30), en particulier une caméra, un laser et/ou une unité de mesure à ultrasons, dans lequel le dispositif de mesure (30) est de préférence configuré pour déterminer la géométrie de profil réelle au moyen d'un procédé de lumière incidente ou de lumière transmise d'un côté du profil.

13. Système d'usinage (1) selon l'une quelconque des revendications 10-12, **caractérisé en ce que** le dispositif de mesure (30') comprend un dispositif de mesure (30') présentant un ou plusieurs capteurs de contact (31', 32').

14. Système d'usinage (1) selon l'une quelconque des revendications 10-13, **caractérisé en ce que** le système d'usinage comprend plusieurs dispositifs d'usinage (10, 10').
